# EUROPÄISCHE PATENTSCHRIFT

(11) **EP 3 818 272 B1**
(45) Veröffentlichungstag und Bekanntmachung des Hinweises auf die Patenterteilung: **28.02.2024**
(21) Anmeldenummer: 19736344.3
(22) Anmeldetag: 02.07.2019
(51) Int. Cl.: F16B 25/00

(54) **SCHRAUBE**
SCREW
VIS

(30) Priorität: 06.07.2018 DE 102018116368
(43) Veröffentlichungstag der Anmeldung: 12.05.2021
(73) Patentinhaber: fischerwerke GmbH & Co. KG, 72178 Waldachtal (DE)
(72) Erfinder: SCHNEIDER, Mattias, 72213 Altensteig (DE); KLAUSER, Philipp, 71131 Jettingen (DE); KRUMBECK, Markus, 71159 Mötzingen (DE)
(86) Internationale Anmeldenummer: PCT/EP2019/067665
(87) Internationale Veröffentlichungsnummer: WO 2020/007821

(56) Entgegenhaltungen:
- EP-A2- 1 813 827

## Beschreibung

Die Erfindung betrifft eine Schraube mit den Merkmalen des Oberbegriffs des Anspruchs 1. Insbesondere betrifft die Erfindung eine selbstschneidende Schraube, deren Gewinde sich ein Gegengewinde in Werkstoffen wie beispielsweise Holz oder Kunststoff selbst schneidet.

Das Patent EP 2 326 848 B1 offenbart eine selbstschneidende Schraube mit einem Schraubenschaft, einem Schraubenkopf an einem hinteren Ende des Schraubenschafts, einer kegelförmigen Schraubenspitze an einem vorderen Ende des Schraubenschafts und einem Schraubengewinde, das an einem vorderen Ende der Schraubenspitze beginnt und bis etwa in eine Längsmitte des Schraubenschafts reicht. Außerdem weist die Schraube einen Schaftfräser zwischen dem Schraubengewinde und dem Schraubenkopf auf, der aus mehreren wendelartig angeordneten Fräsrippen besteht. Die Fräsrippen haben die Aufgabe, das durch die Schraube erzeugte Schraubenloch aufzufräsen und zu weiten, damit der an den Schaftfräser anschließende, gewindefreie Teil des Schafts in das Schraubenloch eindringen kann, und dabei der Eindrehwiderstand durch Reibung zwischen Werkstück und gewindefreiem Teil des Schafts so wenig wie möglich erhöht wird.

Eine mit einem Fräsabschnitt vorgesehene Schraube ist auch aus der EP 1 813 827 A2 bekannt.

Aufgabe der Erfindung ist, eine Schraube vorzuschlagen, bei der das Eindrehmoment verringert ist, ohne die Haltewerte zu mindern.

Diese Aufgabe wird erfindungsgemäß durch die Merkmale des Anspruchs 1 gelöst. Die erfindungsgemäße Schraube weist einen Schraubenkopf und einen sich an den Schraubenkopf anschließenden Schraubenschaft auf, sowie eine Schraubenspitze, die sich an ein vorderes Ende des Schraubenschafts anschließt. Außerdem weist die Schraube ein Schraubengewinde auf, das ein- oder mehrgängig sein kann und das sich von der Schraubenspitze aus über einen Teil einer Länge des Schraubenschafts erstreckt, wobei ein Teil der Schraubenspitze auch gewindefrei sein kann. Das Schraubengewinde weist eine Gewindesteigung auf, wobei diese im Wesentlichen über die gesamte Länge im Bereich des Schafts konstant ist, wohingegen sie im Bereich der Schraubenspitze abweichen kann. "Im Wesentlichen" schließt, auch im Folgenden, jeweils Abweichungen von +/- 20 Prozent, insbesondere von +/- 10 Prozent, ein. Mit "Schraubenspitze" ist hier nicht der vorderste Punkt der Schraube gemeint, sondern der insbesondere konische Übergangsbereich von dem vordersten Punkt der Schraube bis zum Schraubenschaft. "Von der Schraubenspritze aus" meint, dass das Schraubengewinde an einem vorderen Ende, dem vordersten Punkt der Schraube, oder an einem hinteren Ende, also am Übergang zum Schraubenschaft, oder dazwischen beginnen kann. "Vorne" und "hinten" bezieht sich hier stets auf die Einschraubrichtung. Ist im Weiteren von dem "Schraubenschaft" die Rede, ist dies stets so zu verstehen, dass das Schraubengewinde nicht Teil des Schraubenschafts ist. Das gleiche gilt für die Schraubenspitze. Die Schraubenspitze muss nicht mit einer Spitze enden, sondern kann beispielsweise auch die Form eines Kegelstumpfs aufweisen.

Zwischen dem Schraubengewinde und dem Schraubenkopf ist am Schraubenschaft ein Schaftfräser angeordnet. Der Schaftfräser weist einen ersten Satz erster Fräsrippen und einen zweiten Satz zweiter Fräsrippen auf. Sowohl die ersten als auch die zweiten Fräsrippen sind, insbesondere mit gleichem Abstand zueinander, über den Umfang verteilt, wendelförmig angeordnet. Die ersten Fräsrippen weisen eine erste Steigung und die zweiten Fräsrippen eine zweite Steigung auf, die beide von der Gewindesteigung abweichen. Erfindungsgemäß weicht außerdem die erste Steigung von der zweiten Steigung ab. Insbesondere sind die erste und die zweite Steigung dabei jeweils im Wesentlichen längs der Schraubenlängsachse konstant. Soweit sie nicht konstant sind, ist jeweils eine mittlere Steigung gemeint.

Die Fräsrippen eines Satzes erstrecken sich insbesondere alle über die gleiche Länge längs der Schraubenlängsachse. Ein Satz besteht insbesondere aus mindestens zwei und vorzugweise drei oder vier Fräsrippen, es sind aber auch Ausführungsformen möglich, bei der ein Satz nur eine einzige Fräsrippe aufweist.

Durch die erfindungsgemäße Anordnung der genannten Fräsrippen wird erreicht, dass insbesondere Holzfasern vom umgebenden Schraubenloch besser getrennt werden und hierdurch das Fräsen effektiver erfolgt als bisher aus dem Stand der Technik bekannt. Die Holzfasern stehen zur Schraubenlängsachse in sehr unterschiedlichen Winkeln. Daher wird von den Fräsrippen des vorderen Satzes nur ein Teil der betreffenden Holzfasern geschnitten, während ein anderer Teil der Holzfasern lediglich an die Lochwand, also die Wand des Schraubenlochs, gedrängt wird. Durch die sich unterscheidende Steigung der hinteren Fräsrippen wird zumindest ein Teil dieser verbleibenden Holzfasern wieder aufgerichtet und ebenfalls abgetrennt. Im Zusammenspiel der Fräsrippen wird somit ein besseres Fräsergebnis erzielt, wodurch das Eindrehmoment verringert wird.

Erfindungsgemäß sind die ersten Fräsrippen gleichsinnig und die zweiten Fräsrippen gegensinnig mit dem Schraubengewinde. Hierdurch wird der oben genannte Effekt besonders gut erreicht. "Gleichsinnig" und "gegensinnig" bezieht sich auf die Orientierung in Umfangsrichtung um die Schraubenlängsachse. Insbesondere sind die ersten Fräsrippen näher am Schraubengewinde als die zweiten Fräsrippen. Anders ausgedrückt sind die ersten Fräsrippen insbesondere weiter vorne als die zweiten Fräsrippen am Schraubenschaft angeordnet.

Um den gewünschten Fräseffekt besonders zuverlässig zu erreichen, schlägt die Erfindung vor, dass der Betrag der ersten und zweiten Steigung größer als die Gewindesteigung ist, insbesondere mindestens doppelt so groß. Dabei wird hier ein Rechtsgewinde, beziehungsweise eine mit einem Rechtsgewinde gleichsinnig orientierte Fräsrippe, als ein Gewinde mit positiver Steigung verstanden, während ein Linksgewinde als ein Gewinde mit negativer Steigung verstanden wird. Es hat sich gezeigt, dass der beschriebene Effekt beim Fräsen besser funktioniert, wenn der Betrag der Steigungen größer als die Gewindesteigung ist. Insbesondere ist der Betrag aber maximal zehnmal so groß wie die Gewindesteigung. Bei noch größeren Steigungen verschlechtert sich der Effekt wieder.

Vorzugsweise sind die Beträge der ersten und der zweiten Steigung im Wesentlichen gleich, was sich insbesondere beim walzenden Herstellen des Schaftfräsers günstig auf den Materialfluss und die wirkenden Kräfte auswirkt.

Die beiden Sätze Fräsrippen können voneinander beabstandet am Schaft angeordnet sein, schließen jedoch vorzugsweise direkt aneinander an, sind also unmittelbar hintereinander angeordnet. Hierdurch wird vermieden, dass es zwischen den Sätzen zu einer Späneansammlung kommt, die das Eindrehmoment erhöhen würde. Die Erfindung schlägt außerdem vor, dass die ersten Fräsrippen in die zweiten Fräsrippen übergehen, was voraussetzt, dass beide Sätze gleich viele Fräsrippen aufweisen. Dies führt nicht nur zu einer optisch ansprechenden Geometrie, sondern erleichtert auch die Herstellung insbesondere durch einen Walzprozess, da gegenüber einem Versatz der Fräsrippen in Umfangsrichtung weniger Kanten auszubilden sind und hierdurch der Materialfluss beim Umformen begünstigt wird.

Vorzugsweise sind die Fräsrippen des vorderen Satzes gegensinnig und die Fräsrippen des hinteren Satzes gleichsinnig zum Schraubengewinde und es gehen die ersten Fräsrippen in die zweiten Fräsrippen über. Hierdurch entsteht eine V-Form mit den Fräsrippen als Schenkel des "V". Diese V-Form weist in Umfangsrichtung, und zwar in die Richtung, in die die Schraube zum Einschrauben gedreht werden muss. Die Fräsrippen verdeutlichen so die Eindrehrichtung, was die Handhabung insbesondere bei ungeübten Bedienern verbessert. Insbesondere, falls das Schraubengewinde ein Linksgewinde sein sollte, was ungewöhnlich ist, hat die Verdeutlichung der Eindrehrichtung große Vorteile.

In einer bevorzugten Ausführungsform ist der Außendurchmesser des Schaftfräsers kleiner als der Außendurchmesser des Schraubengewindes aber größer als der Schaftdurchmesser. Dies gewährleistet, dass das Schraubenloch im Untergrund nicht mehr als notwendig aufgeweitet wird und somit das Eindrehmoment nicht unnötig erhöht wird. Mit dem "Außendurchmesser" ist jeweils der Durchmesser eines gedachten, den Schaftfräser beziehungsweise das Schraubengewinde umschreibenden Zylinders gemeint, wobei der gedachte Zylinder koaxial mit der Schraubenlängsachse ist.

Vorzugsweise erstrecken sich die ersten Fräsrippen über eine Länge längs der Schraubenlängsachse, die dem 0,6- bis 1,4-fachen, insbesondere dem 0,8- bis 1,2-fachen, des Außendurchmessers des Schaftfräsers entspricht. Insbesondere erstrecken sich außerdem die zweiten Fräsrippen über im Wesentlichen die gleiche Länge. Durch die im Vergleich zu bekannten Schaftfräsern relativ kurzen Fräsrippen wird auch die erfindungsgemäße Kombination aus ersten und zweiten Fräsrippen nicht zu lang, kann also insbesondere auch bei Schrauben mit wenig Platz zwischen Schraubengewinde und Schraubenkopf zum Einsatz kommen. Trotzdem erzielen die relativ kurzen Fräsrippen den erwünschten Effekt. Der Schaftfräser als Ganzer erstreckt sich insbesondere maximal über das 3,5-fache des Außendurchmessers des Schaftfräsers.

In einer bevorzugten Ausführungsform erstrecken sich die Fräsrippen eines Satzes nur über einen Teil des Umfangs des Schraubenschafts, um einen guten Fräseffekt zu erzielen. Dies geht insbesondere einher mit den zuvor genannten, bevorzugten Werten für die Steigung und Länge der Fräsrippen, hat aber auch unabhängig davon Gültigkeit.

Grundsätzlich können zu dem ersten und zweiten Satz Fräsrippen beliebig viele weitere Sätze Fräsrippen hinzukommen, sofern der Schraubenschaft hierfür den Platz bietet. Bevorzugt ist jedoch, maximal einen weiteren Satz Fräsrippen vorzusehen. Dieser dritte Satz über den Umfang verteilter wendelförmig angeordneter dritter Fräsrippen weist eine dritte Steigung auf. Dabei weicht auch die dritte Steigung von der Gewindesteigung ab und auch von einem benachbarten Satz Fräsrippen, wobei es sich dabei um den ersten oder zweiten Satz handelt, je nachdem in welcher Reihenfolge die Sätze angeordnet sind. Insbesondere ist die dritte Steigung gleich der Steigung eines anderen Satzes Fräsrippen, also insbesondere des übernächsten Satzes. Anders ausgedrückt wiederholt sich bei drei Sätzen die Steigung des vorderen Satzes beim hinteren Satz. Dies hat sich als günstig für den genannten Fräseffekt erwiesen, ergibt darüber hinaus aber auch ein besonders harmonisches Bild. Insbesondere sind die Sätze in der Reihenfolge "erster, zweiter, dritter Satz" hintereinander angeordnet und es sind der erste und dritte Satz gegensinnig und der zweite Satz gleichsinnig mit dem Gewinde, wobei die Steigungen der drei Sätze jeweils betragsmäßig gleich ist. Alternativ könnten die Steigungen beispielsweise von vorne nach hinten ansteigen.

Insbesondere für längere Schrauben schlägt die Erfindung vor, dass zwischen dem Schraubenkopf und dem Schaftfräser ein zylindrischer Schaftabschnitt angeordnet ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand zweier Ausführungsbeispiele erläutert.

Es zeigen:
- Figur 1: ein erstes Ausführungsbeispiel in einer Seitenansicht; und
- Figur 2: ein zweites Ausführungsbeispiel in einer Seitenansicht.

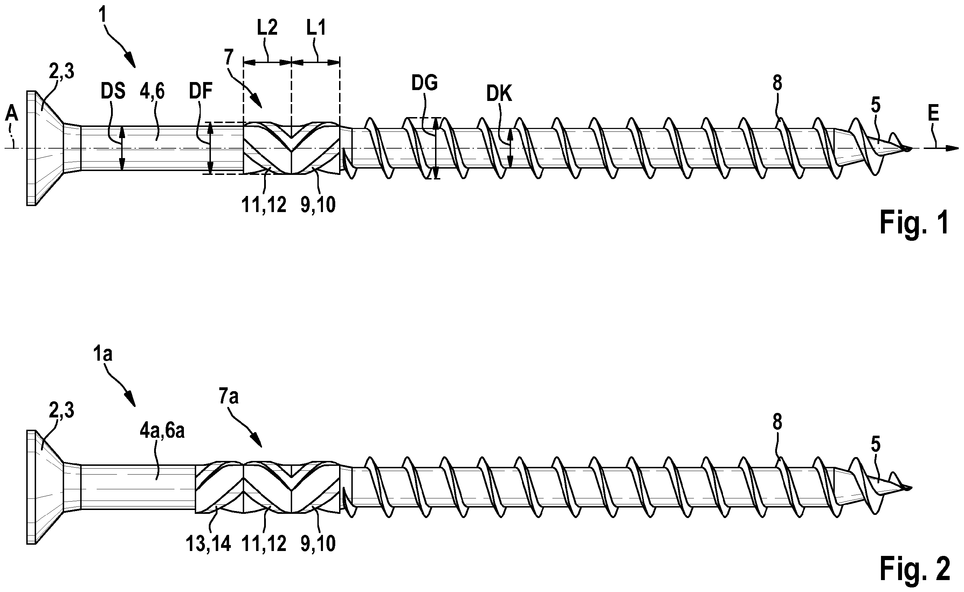

Die in Figur 1 gezeigte, erfindungsgemäße Schraube 1 erstreckt sich entlang einer Schraubenlängsachse A und weist an einem in einer Einschraubrichtung E hinteren Ende einen Schraubenkopf 2 mit einer nicht sichtbaren Werkzeugaufnahmegeometrie und einer doppelkonischen Kopfunterseite 3 auf, die nach vorne weist. An den Schraubenkopf 2 schließt sich ein Schraubenschaft 4 an, der am vorderen Ende der Schraube 1 in eine Schraubenspitze 5 übergeht. In einem an den Schraubenkopf 2 anschließenden Bereich weist der Schraubenschaft 4 einen zylindrischen Schaftabschnitt 6 und hieran anschließend einen Schaftfräser 7 auf. Unmittelbar vor dem Schaftfräser 7 weist der Schraubenschaft 4 ein Schraubengewinde 8 mit einer Gewindesteigung auf. Die Gewindesteigung entspricht etwa dem 0,75-fachen und der Gewindeaußendurchmesser DG etwa dem 1,4-fachen des Außendurchmessers DS des zylindrischen Schaftabschnitts 6. Das Schraubengewinde 8 erstreckt sich durchgängig bis ans vordere Ende der Schraubenspitze 5.

Der Schaftfräser 7 weist einen vorderen, ersten Satz 9 erster Fräsrippen 10 und einen sich unmittelbar hieran anschließenden hinteren, zweiten Satz 11 zweiter Fräsrippen 12 auf. Jeder Satz 9, 11 umfasst jeweils drei Fräsrippen 10, 12, die mit gleichem Abstand zueinander über den Umfang verteilt sich wendelförmig entlang des Schraubenschafts 4 erstrecken. Die Fräsrippen 10, 12 sind also in einem Querschnitt um 120 Grad versetzt zueinander. Die ersten Fräsrippen 10 weisen eine erste Steigung auf, die etwa dem minus 4,4-fachen der Gewindesteigung entspricht, das heißt die ersten Fräsrippen 10 sind gegensinnig mit dem Schraubengewinde 8. Die zweiten Fräsrippen 12 haben zwar betragsmäßig die gleiche Steigung wie die ersten Fräsrippen 10, sind jedoch gleichsinnig mit dem Schraubengewinde 8. Die ersten Fräsrippen 10 gehen dabei V-förmig in die zweiten Fräsrippen 12 über und zeigen so an, wie die Schraube 1 einzudrehen ist. Der Schaftfräser 7 weist einen Außendurchmesser DF auf, der etwa 15 Prozent größer als der Außendurchmessers DS des zylindrischen Schaftabschnitts 6 ist. Der erste und der zweite Satz 9, 11 Fräsrippen 10, 12 weist jeweils eine Länge L1, L2 längs der Schraubenlängsachse A auf, die etwa dem Außendurchmesser DF des Schaftfräsers 7 entspricht.

Beim Eindrehen der Schraube 1 in einen Untergrund (nicht dargestellt) beispielsweise aus Holz, schneidet sich das Gewinde 8 in den Untergrund ein, formt sich dabei ein Gegengewinde und schafft sich den Platz für den Schraubenschaft 4. Hierbei können zusätzliche Geometrien im Bereich des Schraubengewindes 8, wie Nebengewinde, zusätzliche Kanten und dergleichen (nicht dargestellt), das Eindrehen erleichtern, indem das Material des Untergrunds zusätzlich getrennt, geteilt und/oder von der Schraube 1 weggefördert wird. Dringt jedoch der Teil des Schraubenschafts 4 in den Untergrund ein, der sich an das Schraubengewinde 8 anschließt, so muss noch mehr Material des Untergrunds radial (bezogen auf die Schraubenlängsachse A) verdrängt werden, weil ein Kerndurchmesser DK des Schraubengewindes kleiner als der Außendurchmessers DS des zylindrischen Schaftabschnitts 6 ist. Durch den Schaftfräser 1 wird dies erheblich erleichtert, so dass der zylindrische Schaftabschnitt 6 ausreichend Platz findet und kaum zusätzlichen Eindrehwiderstand verursacht. Die ersten Fräsrippen 10 schneiden bei Holz einen Teil der Fasern ab, drängen einen anderen Teil der Fasern jedoch seitlich an Wand des durch das Eindrehen der Schraube 1 entstehenden Lochs, je nachdem in welche Richtung die Fasern zuvor stehen. Die zweiten Fräsrippen 12 richten diese seitlich an die Lochwand gedrängten Fasern auf und schneiden sie ab, so dass zumindest ein größerer Teil der Fasern als beim bekannten Stand der Technik abgefräst, beziehungsweise das Schraubenloch noch besser ausgefräst wird, was das Eindrehen der Schraube 1 letztlich erleichtert.

Figur 2 zeigt ein zweites Ausführungsbeispiel. Die erfindungsgemäße Schraube 1a stimmt in vielen Merkmalen mit dem ersten Ausführungsbeispiel überein, weshalb zur Vermeidung von Wiederholungen nur auf die Unterschiede eingegangen wird. Der Schaftfräser 7a ist länger als im ersten Ausführungsbeispiel und der zylindrische Schaftabschnitt 6a entsprechend kürzer. Zu den unveränderten ersten und zweiten Sätzen 10, 12 Fräsrippen 9, 11 kommt ein dritter Satz 13 dritter Fräsrippen 14. Dieser dritte Satz 13 hat die gleiche Geometrie wie der erste Satz 11, und die dritten Fräsrippen 14 gehen wiederum V-förmig in die zweiten Fräsrippen 12 über. Die dritten Fräsrippen 14 weisen also die gleiche Steigung auf wie die ersten Fräsrippen 10 und haben auch die gleiche Länge. Durch den dritten Satz 13 ergibt sich bei manchen Hölzern ein noch geringeres Eindrehmoment als beim ersten Ausführungsbeispiel, da noch mehr Fasern geschnitten und damit das Schraubenloch noch besser ausgefräst wird.

### Bezugszeichenliste

- 1, 1a: Schraube
- 2: Schraubenkopf
- 3: Kopfunterseite
- 4, 4a: Schraubenschaft
- 5: Schraubenspitze
- 6, 6a: Zylindrischer Schaftabschnitt
- 7, 7a: Schaftfräser
- 8: Schraubengewinde
- 9: Erster Satz Fräsrippen
- 10: Erste Fräsrippen
- 11: Zweiter Satz Fräsrippen
- 12: Zweite Fräsrippen
- 13: Dritter Satz Fräsrippen
- 14: Dritte Fräsrippen
- A: Schraubenlängsachse
- E: Einschraubrichtung
- DF: Außendurchmesser des Schaftfräsers 7, 7a
- DG: Außendurchmesser des Schraubengewindes 8
- DK: Kerndurchmesser des Schraubengewindes 8
- DS: Außendurchmesser des zylindrischen Schaftabschnitts 6, 6a
- L1: Länge des ersten Satzes 9 Fräsrippen
- L2: Länge des zweiten Satzes 11 Fräsrippen

## Patentansprüche

1. Schraube,
- mit einem Schraubenkopf (2),
- mit einem an den Schraubenkopf (2) anschließenden Schraubenschaft (4, 4a) und
- mit einer Schraubenspitze (5), die sich an ein vorderes Ende des Schraubenschafts (4, 4a) anschließt,
- mit einem Schraubengewinde (8), das sich über einen Teil einer Länge des Schraubenschafts (4, 4a) erstreckt und eine Gewindesteigung aufweist, sowie
- mit einem zwischen dem Schraubengewinde (8) und dem Schraubenkopf (2) angeordneten Schaftfräser (7, 7a), der einen ersten Satz (9) über den Umfang verteilter wendelförmig angeordneter erster Fräsrippen (10) aufweist mit einer ersten Steigung, wobei die erste Steigung von der Gewindesteigung abweicht,
**dadurch gekennzeichnet, dass** der Schaftfräser (7, 7a) einen zweiten Satz (11) über den Umfang verteilter wendelförmig angeordneter zweiter Fräsrippen (12) aufweist mit einer zweiten Steigung, wobei die zweite Steigung von der ersten Steigung und der Gewindesteigung abweicht, wobei die ersten Fräsrippen (10) gleichsinnig und die zweiten Fräsrippen (12) gegensinnig mit dem Schraubengewinde (8) sind.

2. Schraube nach Anspruch 1, **dadurch gekennzeichnet, dass** der Betrag der ersten und zweiten Steigung größer als die Gewindesteigung ist, insbesondere mindestens doppelt so groß.

3. Schraube nach einem der vorhergehenden Ansprüche, **dadurch gekennzeichnet, dass** der Betrag der ersten und der zweiten Steigung im Wesentlichen gleich ist.

4. Schraube nach einem der vorhergehenden Ansprüche, **dadurch gekennzeichnet, dass** der erste Satz (9) und der zweite Satz (11) unmittelbar hintereinander angeordnet sind, und dass insbesondere die ersten Fräsrippen (10) in die zweiten Fräsrippen (12) übergehen.

5. Schraube nach Anspruch 4, **dadurch gekennzeichnet, dass** der in Einschraubrichtung (E) der Schraube (1, 1a) vordere Satz (9) gegensinnig und der hintere Satz (11) gleichsinnig mit dem Schraubengewinde (8) ist und die ersten Fräsrippen (10) in die zweiten Fräsrippen (12) übergehen.

6. Schraube nach einem der vorhergehenden Ansprüche, **dadurch gekennzeichnet, dass** sich die ersten Fräsrippen (10) über eine Länge (L1) längs der Schraubenlängsachse (A) erstrecken, die dem 0,6- bis 1,4-fachen, insbesondere dem 0,8- bis 1,2-fachen, des Außendurchmesser (DF) des Schaftfräsers (7, 7a) entspricht.

7. Schraube nach einem der vorhergehenden Ansprüche, **dadurch gekennzeichnet, dass** sich zumindest die Fräsrippen (10, 12, 14) eines Satzes (9, 11, 13) nur einen Teil des Umfangs des Schraubenschafts (4, 4a) erstrecken.

8. Schraube nach einem der vorhergehenden Ansprüche, **dadurch gekennzeichnet, dass** der Schaftfräser (7a) einen dritten Satz (13) über den Umfang verteilter wendelförmig angeordneter dritter Fräsrippen (14) aufweist mit einer dritten Steigung, wobei die dritte Steigung von der Gewindesteigung und einem benachbarten Satz (11) über den Umfang verteilter wendelförmig angeordneter Fräsrippen (12) abweicht, und dass insbesondere die dritte Steigung gleich der Steigung eines anderen Satzes (9) über den Umfang verteilter wendelförmig angeordneter Fräsrippen (10) ist.

9. Schraube nach einem der vorhergehenden Ansprüche, **dadurch gekennzeichnet, dass** zwischen dem Schraubenkopf (2) und dem Schaftfräser (7, 7a) ein zylindrischer Schaftabschnitt (6, 6a) angeordnet ist.

## Claims

1. Screw,
- having a screw head (2),
- having a screw shank (4, 4a) adjoining the screw head (2) and
- having a screw tip (5) which adjoins a front end of the screw shank (4, 4a),
- having a screw thread (8) which extends over a portion of a length of the screw shank (4, 4a) and has a thread pitch, and
- having a shank cutter (7, 7a) arranged between the screw thread (8) and the screw head (2), which shank cutter has a first set (9) of helically arranged first milling ribs (10) distributed over the circumference, which first milling ribs have a first pitch, the first pitch differing from the thread pitch,
**characterised in that** the shank cutter (7, 7a) has a second set (11) of helically arranged second milling ribs (12) distributed over the circumference, which second milling ribs have a second pitch, the second pitch differing from the first pitch and from the thread pitch, wherein the first milling ribs (10) run in the same direction as the screw thread (8) and the second milling ribs (12) run in the opposite direction to the screw thread (8).

2. Screw according to claim 1, **characterised in that** the size of the first and second pitch is larger than the thread pitch, especially at least twice as large.

3. Screw according to either one of the preceding claims, **characterised in that** the size of the first and the second pitch is substantially the same.

4. Screw according to any one of the preceding claims, **characterised in that** the first set (9) and the second set (11) are arranged immediately one after the other; and especially the first milling ribs (10) merge into the second milling ribs (12).

5. Screw according to claim 4, **characterised in that** the front set (9) in the screw-in direction (E) of the screw (1, 1a) runs in the opposite direction to the screw thread (8) and the rear set (11) runs in the same direction as the screw thread (8), and the first milling ribs (10) merge into the second milling ribs (12).

6. Screw according to any one of the preceding claims, **characterised in that** the first milling ribs (10) extend along the longitudinal axis (A) of the screw over a length (L1) corresponding to from 0.6 to 1.4 times, especially from 0.8 to 1.2 times, the external diameter (DF) of the shank cutter (7, 7a).

7. Screw according to any one of the preceding claims, **characterised in that** at least the milling ribs (10, 12, 14) of a set (9, 11, 13) extend over only a portion of the circumference of the screw shank (4, 4a).

8. Screw according to any one of the preceding claims, **characterised in that** the shank cutter (7a) has a third set (13) of helically arranged third milling ribs (14) distributed over the circumference, which third milling ribs have a third pitch, the third pitch differing from the thread pitch and from an adjacent set (11) of helically arranged milling ribs (12) distributed over the circumference; and especially the third pitch is the same as the pitch of another set (9) of helically arranged milling ribs (10) distributed over the circumference.

9. Screw according to any one of the preceding claims, **characterised in that** a cylindrical shank portion (6, 6a) is arranged between the screw head (2) and the shank cutter (7, 7a).

## Revendications

1. Vis comprenant
- une tête (2),
- un fût (4, 4a) se rattachant à ladite tête (2) de la vis
et
- une pointe (5) se rattachant à une extrémité antérieure du fût (4, 4a) de la vis,
- un filetage (8) qui s'étend sur une partie d'une longueur dudit fût (4, 4a) de la vis, et présente un pas de filetage,
- ainsi qu'une fraise en bout (7, 7a) interposée entre le filetage (8) de la vis et la tête (2) de ladite vis, et munie d'un premier ensemble (9) de premières nervures de fraisage (10) réparties sur le pourtour, agencées en hélice et dotées d'un premier pas, lequel premier pas diffère du pas du filetage,
**caractérisée par le fait que**
la fraise en bout (7, 7a) comporte un deuxième ensemble (11) de deuxièmes nervures de fraisage (12) réparties sur le pourtour, agencées en hélice et pourvues d'un deuxième pas, lequel deuxième pas diffère du premier pas et du pas du filetage, sachant que les premières nervures de fraisage (10) et les deuxièmes nervures de fraisage (12) sont orientées, respectivement, dans le même sens que le filetage (8) de la vis et en sens inverse dudit filetage.

2. Vis selon la revendication 1, **caractérisée par le fait que** la valeur des premier et deuxième pas est supérieure au pas du filetage, et représente au moins le double en particulier.

3. Vis selon l'une des revendications précédentes, **caractérisée par le fait que** les valeurs des premier et deuxième pas sont sensiblement identiques.

4. Vis selon l'une des revendications précédentes, **caractérisée par le fait que** le premier ensemble (9) et le deuxième ensemble (11) sont placés en succession directe ; et **par le fait que** les premières nervures de fraisage (10) fusionnent notamment dans les deuxièmes nervures de fraisage (12).

5. Vis selon la revendication 4, **caractérisée par le fait que** l'ensemble (9) situé à l'avant dans la direction de vissage (E) de ladite vis (1, 1a), et l'ensemble (11) situé à l'arrière, sont orientés respectivement en sens inverse et dans le même sens, par rapport au filetage (8) de ladite vis, et les premières nervures de fraisage (10) fusionnent dans les deuxièmes nervures de fraisage (12).

6. Vis selon l'une des revendications précédentes, **caractérisée par le fait que** les premières nervures de fraisage (10) s'étendent, le long d'un axe longitudinal (A) de ladite vis, sur une longueur (L1) correspondant à de 0,6 à 1,4 fois, notamment à de 0,8 à 1,2 fois le diamètre extérieur (DF) de la fraise en bout (7, 7a).

7. Vis selon l'une des revendications précédentes, **caractérisée par le fait qu'**au moins les nervures de fraisage (10, 12, 14) d'un ensemble (9, 11, 13) s'étendent uniquement sur une partie du pourtour du fût (4, 4a) de ladite vis.

8. Vis selon l'une des revendications précédentes, **caractérisée par le fait que** la fraise en bout (7a) est nantie d'un troisième ensemble (13) de troisièmes nervures de fraisage (14) réparties sur le pourtour, agencées en hélice et présentant un troisième pas, lequel troisième pas diffère du pas du filetage et d'un ensemble adjacent (11) de nervures de fraisage (12) réparties sur le pourtour et agencées en hélice ; et notamment **par le fait que** ledit troisième pas est égal au pas d'un autre ensemble (9) de nervures de fraisage (10) réparties sur le pourtour et agencées en hélice.

9. Vis selon l'une des revendications précédentes, **caractérisée par le fait qu'**un tronçon de fût cylindrique (6, 6a) est interposé entre la fraise en bout (7, 7a) et la tête (2) de ladite vis.
